# EUROPEAN PATENT SPECIFICATION

(11) **EP 1 555 179 B1**
(45) Date of publication and mention of the grant of the patent: **07.03.2007**
(21) Application number: 04380010.1
(22) Date of filing: 13.01.2004
(51) Int. Cl.: B60T 7/06, G05G 1/14

(54) **Adjustable pedal assembly for vehicles**
Einstellbare Pedaleinheit für Fahrzeuge
Ensemble de pédale de frein réglable pour un véhicule

(43) Date of publication of application: 20.07.2005
(73) Proprietor: Autotech Engineering, A.I.E., 48220 Abadino (Vizcaya) (ES)
(72) Inventor: Castillo Gonzales, Jaime, c/o Autotech Eng.,A.I.E, 48220 Abadino (Vizcaya) (ES)
(74) Representative: Carpintero Lopez, Francisco

(56) References cited:
- EP-A- 1 179 762
- DE-C- 10 138 116
- US-A1- 2003 056 615

## Description

### OBJECT OF THE INVENTION

The present invention relates to a pedal assembly with simultaneous adjustment of the position of the brake pedal and accelerator pedal which allows the brake and accelerator pedals to be displaced to achieve a comfortable posture at the steering wheel for drivers of all statures, maintaining also the minimum safety distance between the airbag module and the driver's body.

The present invention also includes a mechanism for release of the brake pedal integral with the adjusting mechanism which allows that, in the moment of collision, the adjusting system of the brake pedal becomes loose and independent of the connection with the hydraulic system, offering no great resistance in the event of striking against the driver's legs.

### BACKGROUND OF THE INVENTION

The fixed position of the pedals in motor vehicles signifies that drivers of reduced stature have to come a lot closer to the steering wheel, sliding the seat forward to do so, resulting in a decrease in the distance with respect to the steering wheel. Thus, in the event of a crash, serious injuries occur because the airbag is too near the driver. This situation arises when the distance between the driver and the steering wheel is less than approximately 25 cm, there being a high risk of suffering injury as a consequence of the explosion of the airbag even when the crash is not too violent. This aspect is specially critical for pregnant women, for whom the separation from the steering wheel is substantially diminished.

Faced with this situation there is a clear need to create pedal assemblies adjustable to driver size which allow, instead of having to move the seat forward so that the driver achieves a more comfortable posture, the pedals to be moved back until said posture is achieved, maintaining the minimum safety distance between the airbag module and the body.

People with a smaller stature notice to a greater degree the advantages that an adjustable pedal provides for them, although they also increase the well-being of taller drivers because they reduce the risk of injury to their knees in a collision, by distancing the same from the front of the vehicle. They also benefit corpulent drivers. Logically this well-being diminishes between the most comfortable position for the driver and the maximum tolerable for the pedals for drivers of all heights. However only the shortest drivers find a considerable difference between the normal position of the pedal and the most comfortable. This is because the shortest drivers in the normal position of the pedal lift their heel in order to be able to reach the accelerator and the brake. If the extension of the pedal is increased, this lifting movement is minimized.

Moreover, it has to be taken into account that, in the event of an accident, the steering column can be displaced sideways and strike the brake pedal which is located alongside, which determines that the steering column finds its progress impeded and forces of reaction are originated which will modify the course of displacement of the column and conclude by impacting against the driver causing him serious injury.

With the aim of preventing the intrusion of these elements into the interior of the vehicle, components and systems are designed which are intended to reduce or remove the negative effects which these intrusions can have for the driver.

European Patent EP-1.179.762 discloses an assembly formed by a brake pedal and an acceleration pedal mounted in rocking arrangement.

### DESCRIPTION OF THE INVENTION

The pedal assembly object of the invention allows the simultaneous adjustment of the brake and accelerator pedals offering an alternative solution to the problem of regulating the driver's position with respect to the pedals, allowing the pedals to be brought nearer, especially for drivers of reduced stature.

The principle of the adjustment rests in the fact that the two pedals, brake and accelerator, are divided into two parts, a first part constituting the pedal proper and which incorporates the pertinent support for the driver's foot and a second part which is joined to the support of the pedal assembly which is fixed, both parts being coupled through some guides or slides foreseen in the second part, so that the first part can de displaced with respect the second part, determining that the corresponding pedal remains more or less behind with respect to the driver.

The displacement of the first part of the pedals with respect to the second part is produced by means of an electric motor which acts on individual worm gears which drive a number cams and rocking pieces which determine the simultaneous movement of the first parts of the pedals.

The rotation of the electric motor is transmitted, via a flexible steel cable, to the lower part of a worm gear held by a supporting piece the axis of rotation of which is the axle of the brake pedal and which is riveted to the second part of the brake pedal, specifically the part which is coupled to the hydraulic system and with respect to which the first part of the brake pedal will be displaced.

Clamped to the worm gear of the brake is a threaded piece, the rotation of which is blocked, so that the movement of the worm gear causes the translation of the threaded piece, the movement of which causes the rocking of a lever, through a connecting rod, and in turn the movement of the lever is transformed, by means of another connecting rod, into the translation of the first part of the control with respect to the second part.

As for the accelerator pedal, the presence of another flexible steel cable allows the rotation of the worm gear of the brake to be transmitted to the worm gear of the accelerator which has the same type of adjustment as the brake, except on this occasion there is a direct transformation of the translation along the screw into translation of one part of the accelerator pedal with respect to the other part.

As for the system for release of the brake pedal in the event of collision, the steering column support, as a consequence of the relative movement between the latter and the pedal assembly, strikes against a rocker arm which rotates with respect to the supports of the brake until striking a release mechanism which will snap the rivets which unite the fastening piece of the worm gear with the part of the brake pedal which is connected to the hydraulic system. Thus, the adjusting system of the pedal is free and independent of the hydraulic system and the other part of the brake pedal can move freely offering no great resistance in the event of striking the drivers legs.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

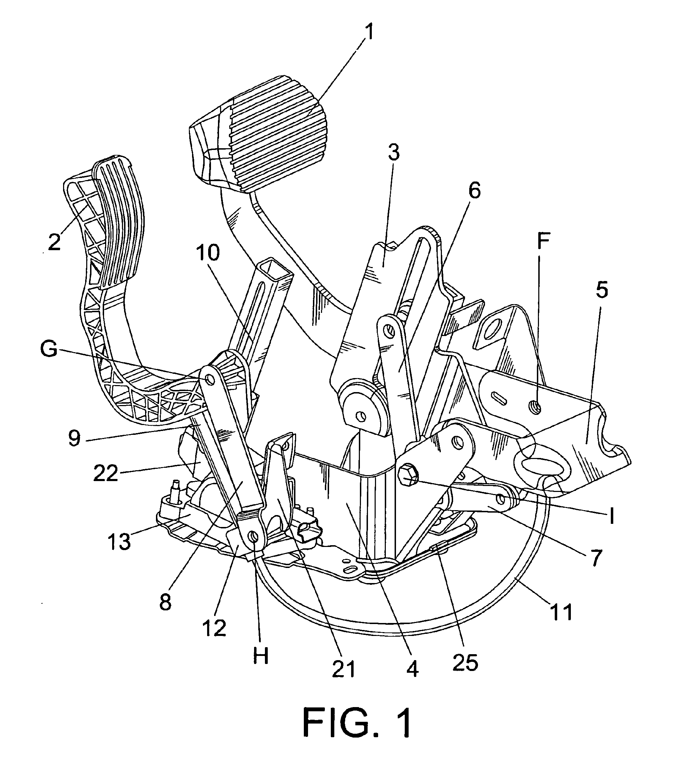

Figure 1. - It shows a general view in perspective of the pedal assembly in which it is possible to appreciate part of the pedal adjustment mechanism as well as the system for release of the brake pedal in the event of collision.

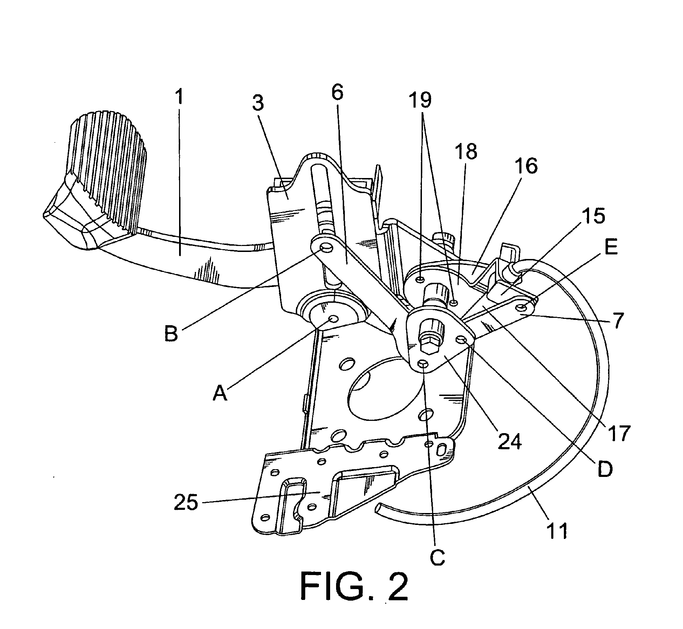

Figure 2. - It shows a general view in perspective of the pedal assembly in which some pieces have been suppressed like the brake supports as well as all the accelerator part, the purpose being to appreciate in greater detail the elements which constitute the adjusting mechanism of the brake pedal, such as the worm gear of the brake, the lever, the two connecting rods of the brake mechanism, the slide located in the piece engaging with the stem, etc.

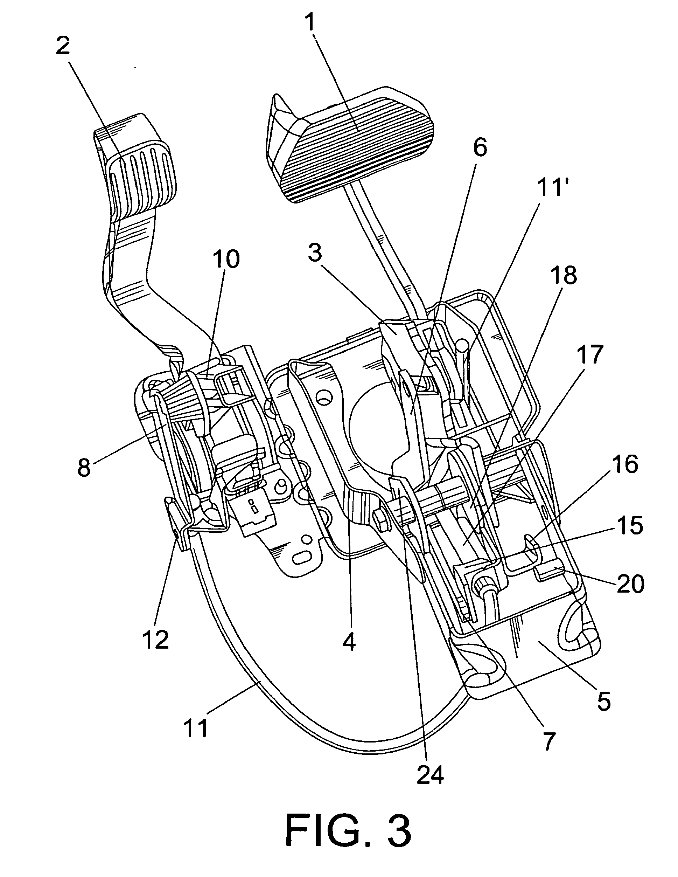

Figure 3. - It shows an upward view in perspective of the pedal assembly in which one can appreciate in greater detail the pieces which constitute the system for release of the brake pedal in the event of collision, such as the rocker arm, the release mechanism, etc.

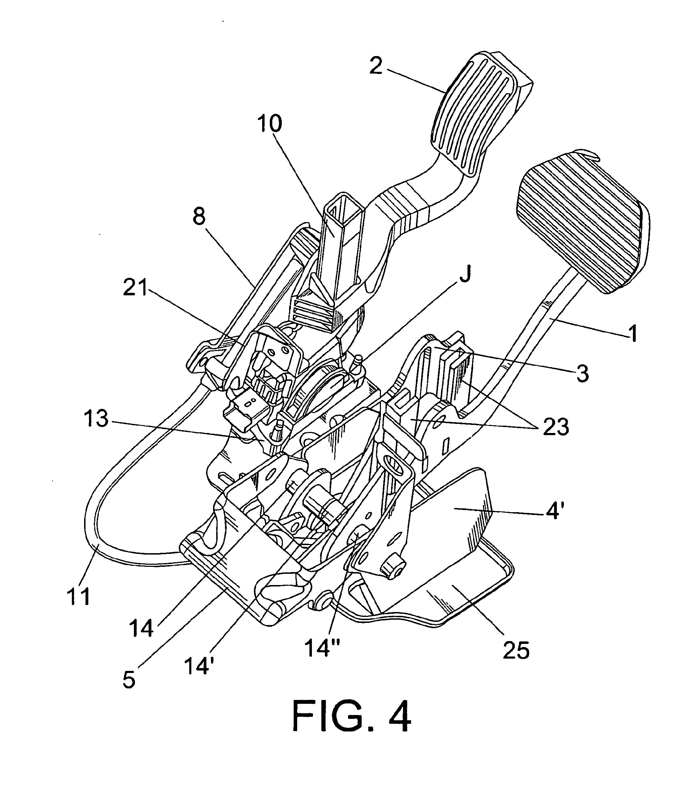

Figure 4. - It shows a rear general view in perspective of the pedal assembly in which one can appreciate in greater detail the pedals divided into two parts, the slide located in the piece which engages with the stem and the three hollow tubes, each one integral with a piece, and which rotate around the axle of the brake pedal.

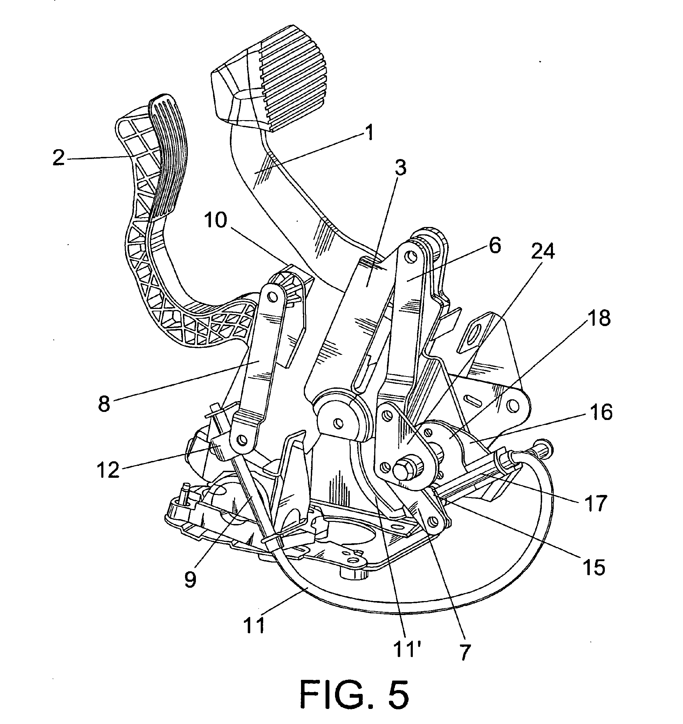

Figure 5. - It shows a general view in perspective of the pedal assembly in which some pieces have been suppressed and wherein can be seen the end position adopted by the elements of the pedal assembly when the adjustment of the pedals has been carried out.

### PREFERRED EMBODIMENT OF THE INVENTION

The mechanism for simultaneous adjustment of the brake and accelerator pedal which constitutes the object of this invention is formed by the following elements: a supporting base of the pedal assembly (25) which maintains the brake supports (4) and (4') integral at all times, which are welded to the base (25), and to the potentiometer of the accelerator (13) which is screwed to the base (25), a brake pedal divided into two parts, a first part (1) of the brake pedal which will slide in the adjustment of the pedals on a second brake part (3) which incorporates a groove and some slides (23), a steel cable (11') which connects to an electric motor on one of its ends and to the lower part of a worm gear (17) at the other end, transmitting the rotation from the motor to said screw. The worm gear (17) is held by the piece (18) integral with the hollow tube (14') and which is riveted, by means of individual rivets (19), to the release mechanism (16) and the second part (3) which, in turn, is integral with the hollow tube (14 "). The pieces (18), (16) and (3) will be integral at all times except in the event of collision.

Mounted on the worm gear (17) is a threaded piece (15) the rotation of which is blocked and which, with the rotation of the screw (17), is displaced along the latter. Hinged at (E) to the piece (15) and at (D) to the lever (24) is the connecting rod (7) which will serve to transform the translational movement of the piece (15) into rotation of the lever (24). Hinged at C to the lever (24) is the connecting rod (6) which will transform the rotational movement of the lever (24) into a translational movement of the part (1) of the brake pedal which, consequently, will be displaced over the slides (23) integral with the second part (3) of the brake pedal. The connecting rod (6) and the first part (1) of the brake pedal are hinged at (B). The part of the brake pedal (3) is hinged at (I) to the supports (4) (4') joined by welding to the base support (25).

For the simultaneous adjustment of the accelerator pedal, a second steel cable (11) is used which serves to transmit the rotation of the worm gear (17) to the worm gear (9), said worm gear being held by the pieces (21) and (22) which are integral with the second part of the pedal (10) which is hinged at (J) to the potentiometer (13) which, in turn, is joined by screws to the base support (25). Mounted on the worm gear (9) is the threaded piece (12) which, with the rotation of the screw (9), and through not being able to rotate with it, is displaced along its length. The connecting rod (8) is hinged to the piece (12) at (H) and hinged at (G) to the first part (2) of the accelerator pedal which will be displaced along the second part (10). The connecting rod (8) is that which serves to transform the translational movement of the piece (12) into translational movement of the first part (2) of the accelerator pedal.

During normal operation of the pedals due to the absence of rotation of the worm gear (17) the whole system of adjusting the pedals is immobile and all the pieces are integral with each other, it being possible for all to rotate as two integral assemblies (one for each pedal) around the axles of the brake (I) and accelerator (J) pedal. During the simultaneous adjustment of the pedals the rotational movement of the electric motor, not shown in the figures, is transmitted through a flexible steel cable (11') to the lower part of the worm gear (17) which is held at its two ends by the piece (18) integral in turn with the hollow tube (14') and riveted at (19) to the release mechanism (16) and the part (3) of the brake pedal which connects with the hydraulic drive and which in turn is integral with the hollow tube (14 "). The rotational movement of the worm gear (17) originates a translational movement in the threaded piece (15) along the length of the worm gear (17), which translational movement is taken by means of the connecting rod (7), hinged at (E) to (15), to ihe iever (19), the latter rotating around the axle of the pedal in an independent manner since its hollow tube (14) is independent of hollow tube (14') and hollow tube (14 "). Finally the rotational movement of the lever (19) is transformed by means of the connecting rod (6), hinged to (19) at (C) and to (1) at (B), into translational movement of the part (1) of the brake pedal which is displaced on the part (3) along the slides (23), obtaining the desired adjustment in the brake pedal.

As for the accelerator pedal, the adjustment is simultaneous to that of the brake but, however, the presence of the flexible steel cable (11) allows operation, independently of the brake, in the normal use of the accelerator pedal. The flexible steel cable (11) is coupled to the upper part of the worm gear (17), which cable will serve for transmitting the rotation of the worm gear (17) of the brake to the worm gear (9) of the accelerator. The rotational movement of the worm gear (9) originates in the threaded piece (12) a screw movement along the length of the worm gear (9), which translational movement is taken by means of the connecting rod (8), hinged at (H) to (12) and at (G) to (2), to the part (2) of the accelerator pedal (2) which will be displaced along the part (10) of the pedal achieving the desired adjustment and in a simultaneous manner to the brake adjustment.

As for the system for release of the brake pedal in the event of head-on collision, the relative movement of the steering column support in relation to the pedal assembly would cause the impact of said support against the rocker arm (5) which would rotate around its hinge (F) on the supports (4) and (4') until the piece (20) welded to (5) strikes against the release mechanism (16), which will produce the snapping of the rivets (19). When the rivets (19) have been snapped, the piece (18) ceases to be integral with the part (3) of the brake pedal, it being able to rotate around the axle of the brake pedal, in a manner independent to (3) since the piece (18) is welded to the hollow tube (14') and the part (3) of the pedal to the hollow tube (14 "), the adjusting system being free and independent of the coupling with the hydraulic system and the part (1) of the pedal can move freely over the slides (23) offering no great resistance in the event of striking against the driver's legs.

## Claims

1. - Adjustable pedal assembly for vehicles, comprising a brake pedal and an accelerator pedal mounted in rocking arrangement, through corresponding axles of rotation (I) and (J) on a support for fastening to the structure of the vehicle (25), wherein the brake pedal and the accelerator pedal are each divided into two parts, a first part (1),(2) constituting the pedal proper and a second part (3),(10) which is joined to the support of the pedal assembly, with the particularity that the first part (1),(2) is displaceable in guides foreseen in the second part (3),(10) so that the relative position between the two parts determines that the pedals are more or less set back with respect to the driver, the displacement, between the first part (1) and (2) and the second part (3), (10), being produced by an electric motor which drives a first worm gears (9) and a second worm gear (17) which results in the simultaneous adjustment of the pedals but in such a way that, in the absence of movement of the worm gears, the system remains immobile and all the pieces of each pedal integral with each other, being able to rotate as two integral assemblies, one for each pedal, around their corresponding rocking axles, **characterised in that**
the motor, through a first cable (11) and a second cable (11'), drives the first and second worm gears (9) and (17) on which are mounted first and second threaded pieces (12) and (15), prevented from turning, and to which are joined, in a hinged arrangement, a first brake connecting rod (7) and an accelerator connecting rod (8), the accelerator connecting rod (8) acting through its other end on the first part (2) of the accelerator pedal which slides with respect to the second part (10), joined to the support of the pedal assembly, transforming the translational movement of the threaded piece (12) into a translational movement of the second part (10) of the accelerator pedal, whilst the first brake connecting rod (7) is joined by its other end to a lever (24) to which is joined, also in a hinged manner, a second brake connecting rod (6), the second brake connecting rod (6) being hinged to an end of the first part (1) of the brake pedal which is displaced with respect to some guides (23) foreseen in the second part (3) of the brake pedal, the rotational movement of the lever (24) being transformed into a translational movement of the first part (1) of the brake pedal.

2. - Adjustable pedal assembly for vehicles, according to claim 1 **characterised in that** the second worm gear (17) is held by a piece (18) integral with a hollow tube (14'), the piece (18) being joined by means of individual rivets (19) to a release mechanism (16), as well as to the second part (3) of the brake pedal which in turn is integral with a hollow tube (14').

3. - Adjustable pedal assembly for vehicles, according to claim 1, **characterised in that** the first worm gear (9) is held by a first piece (21) and a second piece (22) which are secured to a support (13) of the pedal assembly.

4. - Adjustable pedal assembly for vehicles, according to claims 1 and 2, **characterised in that** a steel second cable (11') is connected at one of its ends with the electric motor and by the other to the second worm gear (17), whilst the first cable (11) transmits the rotation of the second worm gear (17) to the first worm gear (9).

5. - Adjustable pedal assembly for vehicles, according to claims 1 **characterised in that** a rocker arm (5) is mounted in a hinged arrangement on first and second supports (4) and (4') of the brake, having in the internal part thereof a welded piece (20) which, in the rotation of the rocker arm (5) strikes against a release mechanism (16) causing the snapping of rivets (19).

## Patentansprüche

1. Einstellbare Pedalanordnung für Fahrzeuge, mit einem Bremspedal und einem Gaspedal, die in schwenkbarer Anordnung angebracht sind, durch entsprechende Drehachsen (I) und (J) an einer Lagerung zum Befestigen an der Struktur des Fahrzeugs (25), wobei das Bremspedal und das Gaspedal jeweils in zwei Teile geteilt sind, wobei ein erster Teil (1, 2) das eigentliche Pedal bildet und ein zweiter Teil (3, 10), der an der Lagerung der Pedalanordnung angebracht ist, mit der Besonderheit, dass der erste Teil (1, 2) in Führungen verschiebbar ist, die in dem zweiten Teil (3, 10) vorgesehen sind, so dass die relative Position zwischen den beiden Teilen bestimmt, dass die Pedale mehr oder weniger mit Bezug auf den Fahrer zurückgesetzt sind, wobei die Verschiebung zwischen dem ersten Teil (1) und (2) und dem zweiten Teil (3 und 10) mittels eines elektrischen Motors erzeugt wird, der ein erstes Schneckenrad (9) und ein zweites Schneckenrad (17) antreibt, was zu der gleichzeitigen Einstellung der Pedale führt, aber so, dass in Abwesenheit der Bewegung der Schneckenräder das System unbeweglich bleibt und alle Teile jedes Pedals sich integral miteinander als zwei integrale Anordnungen drehen können, jede für ein Pedal, um ihre entsprechenden Schwenkachsen herum,
**dadurch gekennzeichnet, dass**
der Motor, durch ein erstes Kabel (11) und ein zweites Kabel (11'), das erste (9) und das zweite Schneckenrad (17) antreibt, an welchen ein erstes (12) und ein zweites Gewindestück (15) angebracht sind, die an einer Drehung gehindert sind, und mit welchen in einer klappbaren Anordnung eine erste Bremsverbindungsstange (7) und eine Gasverbindungsstange (8) verbunden sind, wobei diese Gasverbindungsstange (8) durch ihr anderes Ende auf den ersten Teil (12) des Gaspedals einwirkt, der mit Bezug auf den zweiten Teil (10) gleitet, verbunden mit der Lagerung der Pedalanordnung, wodurch die Translationsbewegung des Gewindeteils (12) in eine Translationsbewegung des zweiten Teils (10) des Gaspedals umgewandelt wird, während die erste Bremsverbindungsstange (7) an ihrem anderen Ende mit einem Hebel (24) verbunden ist, mit welchem ebenfalls auf klappbare Art und Weise eine zweite Bremsverbindungsstange (6) verbunden ist, wobei die zweite Bremsverbindungsstange (6) an einem Ende des ersten Teils (1) des Bremspedals klappbar angebracht ist, welches mit Bezug auf einige Führungen (23) verschoben wird, welche in dem zweiten Teil (3) des Bremspedals vorgesehen sind, wobei die Drehbewegung des Hebels (24) in eine Translationsbewegung des ersten Teils (1) des Bremspedals umgewandelt wird.

2. Einstellbare Pedalanordnung für Fahrzeuge nach Anspruch 1, **dadurch gekennzeichnet, dass** das zweite Schneckenrad (17) durch ein Element (18) gehalten wird, das integral mit einer hohlen Röhre (14') ist, wobei dieses Element (18) mittels einzelner Nieten (19) an einem Lösemechanismus (16) angebracht ist sowie an dem zweiten Teil (3) des Bremspedals, welches seinerseits integral mit einer hohlen Röhre (14') ist.

3. Einstellbare Pedalanordnung für Fahrzeuge nach Anspruch 1, **dadurch gekennzeichnet, dass** das erste Schneckenrad (9) mittels eines ersten Elements (21) und eines zweiten Elements (22), die an der Halterung (13) der Pedalanordnung gesichert sind, gehalten wird.

4. Einstellbare Pedalanordnung für Fahrzeuge nach Anspruch 1 und 2, **dadurch gekennzeichnet, dass** ein zweites Stahlkabel (11') an einem seiner Enden mit dem elektrischen Motor verbunden ist und mittels des anderen an dem zweiten Schneckenrad (17), während das erste Kabel (11) die Drehung des zweiten Schneckenrads (17) auf das erste Schneckenrad (9) überträgt.

5. Einstellbare Pedalanordnung für Fahrzeuge nach Anspruch 1, **dadurch gekennzeichnet, dass** ein Schwenkarm (5) in einer klappbaren Anordnung an einer ersten (4) und einer zweiten Halterung (4') der Bremse angebracht ist, wobei im Inneren davon ein geschweißtes Element (20) vorgesehen ist, welches während der Drehung des Schwenkarms (5) gegen einen Lösemechanismus (16) schlägt, was zu dem Einschnappen von Nieten (19) führt.

## Revendications

1. Ensemble de pédale réglable pour véhicules, comprenant une pédale de frein et une pédale d'accélérateur montées en configuration oscillante, à travers des essieux de rotation correspondants (I) et (J) sur un support destiné à fixer à la structure du véhicule (25), dans lequel la pédale de frein et la pédale d'accélérateur sont divisées chacune en deux parties, une première partie (1), (2) constituant la pédale elle-même et une deuxième partie (3), (10) qui est jointe à la structure de l'ensemble de pédale, avec la particularité que la première partie (1), (2) est déplaçable dans des guides prévus dans la deuxième partie (3), (10) de sorte que la position relative entre les deux parties détermine que les pédales sont plus ou moins écartées par rapport au conducteur, le déplacement, entre la première partie (1) et (2) et la deuxième partie (3), (10), étant produit par un moteur électrique qui entraîne une première roue à vis sans fin (9) et une deuxième roue à vis sans fin (17) qui entraîne l'ajustement simultané des pédales mais de telle manière que, en l'absence de mouvement des roues à vis sans fin, le système reste immobile et toutes les pièces de chaque pédale d'un seul tenant les unes avec les autres étant capables de tourner en tant que deux ensembles intégraux, un pour chaque pédale, autour de leurs essieux oscillants correspondants, **caractérisé en ce que**
Le moteur, à travers un premier câble (11) et un deuxième câble (11'), entraîne les première et deuxième roues à vis sans fin (9) et (17) sur lesquelles sont montées des première et deuxièmes pièces filetées (12) et (15), empêchées de tourner, et auxquelles sont jointes, dans un agencement articulé, une première tige de raccordement de frein (7) et une tige de raccordement d'accélération (8), la tige de raccordement d'accélérateur (8) agissant à travers son autre extrémité sur la première partie (2) de la pédale d'accélérateur qui coulisse par rapport à la deuxième partie (10), jointe au support de l'ensemble de pédale, transformant le mouvement de translation de la pièce filetée (12) en un mouvement de translation de la deuxième partie (10) de la pédale d'accélérateur, alors que la première tige de raccordement de frein (7) est jointe par son autre extrémité à un levier (24) auquel est jointe, également d'une manière articulée, une deuxième tige de raccordement de frein (6), la deuxième tige de raccordement de frein (6) étant articulée par rapport à une extrémité de la première partie (1) de la pédale de frein qui est déplacée par rapport à des guides (23) prévus dans la deuxième partie (3) de la pédale de frein, le mouvement de rotation du levier (24) étant transformé en un mouvement de translation de la première partie (1) de la pédale de frein.

2. Ensemble de pédale réglable pour véhicules selon la revendication 1, **caractérisé en ce que** la deuxième roue à vis sans fin (17) est retenue par une pièce (18) d'un seul tenant avec un tube creux (14'), la pièce (18) étant jointe au moyen de rivets individuels (19) à un mécanisme de relâchement (16), ainsi qu'à la deuxième partie (3) de la pédale de frein qui à son tour est d'un seul tenant avec un tube creux (14').

3. Ensemble de pédale réglable pour véhicules selon la revendication 1, **caractérisé en ce que** la première roue à vis sans fin (9) est retenue par une première pièce (21) et une deuxième pièce (22) qui sont fixées au support (13) de l'ensemble de pédale.

4. Ensemble de pédale réglable pour véhicules selon les revendications 1 et 2, **caractérisé en ce qu'**un deuxième câble d'acier (11') est raccordé au niveau d'une de ses extrémités avec le moteur électrique et par l'autre à la deuxième roue à vis sans fin (17), alors que le premier câble (11) émet la rotation de la deuxième roue à vis sans fin (17) à la première roue à vis sans fin (9).

5. Ensemble de pédale réglable pour véhicules selon la revendication 1, **caractérisé en ce qu'**un bras oscillant (5) est monté dans une configuration articulée sur les premier et deuxième supports (4) et (4') du frein, ayant dans leur partie interne une pièce soudée (20) qui, dans la rotation du bras oscillant (5) heurte contre le mécanisme de relâchement (16) provoquant la pression des rivets (19).
